# EUROPÄISCHE PATENTANMELDUNG

(11) **EP 4 636 161 A2**
(43) Veröffentlichungstag der Anmeldung: **22.10.2025**
(21) Anmeldenummer: 25193073.1
(22) Anmeldetag: 04.07.2019
(51) Int. Cl.: E01H 4/00

(54) **PISTENRAUPE MIT EINER HECKFRÄSE UND EINEM KETTENLAUFWERK**

(30) Priorität: 07.08.2018 DE 102018213240
(62) Teilanmeldung aus: 24207386.4
(71) Anmelder: Kässbohrer Geländefahrzeug AG, 88471 Laupheim (DE)
(72) Erfinder: Betz, Peter, 88471 Baustetten (DE); Kuhn, Michael, 88480 Achstetten (DE); Luigart, Christof, 89155 Erbach (DE); Mayer, Andreas, 89597 Munderkingen (DE)
(74) Vertreter: Patentanwälte Ruff, Wilhelm, Beier, Dauster & Partner mbB

(57) **Zusammenfassung**

1. Pistenraupe mit einem Kettenlaufwerk

2.1 Eine derartige Pistenraupe mit einem Kettenlaufwerk, das mittels eines Fahrantriebsystems antreibbar ist, wobei das Fahrantriebsystem zwei Elektromotoren aufweist, die jeweils einem Turasrad einer Laufwerksseite des Kettenlaufwerks zugeordnet sind, ist bekannt.

2.2 Erfindungsgemäß ist ein Arbeitshydrauliksystem vorgesehen, das wenigstens einen der Pistenraupe zugeordneten hydrostatischen Rotationsantrieb aufweist, und dass das Arbeitshydrauliksystem durch wenigstens einen Elektromotor angetrieben ist, der durch eine fahrzeugseitig montierte Energiequelle versorgt ist.

2.3 Einsatz für Kettenfahrzeuge

## Beschreibung

Die Erfindung betrifft eine Pistenraupe mit einer Heckfräse und mit einem Kettenlaufwerk, das mittels eines emissionsfreien Fahrantriebsystems antreibbar ist, wobei das emissionsfreie Fahrantriebsystem zwei Elektromotoren aufweist, die jeweils einem Turasrad einer Laufwerksseite des Kettenlaufwerks zugeordnet sind.

Eine derartige Pistenraupe ist aus der US 5,363,937 A bekannt. Die Pistenraupe weist ein Kettenlaufwerk mit zwei Fahrketten auf, die an gegenüberliegenden Längsseiten der Pistenraupe vorgesehen sind, und die durch jeweils ein Triebrad angetrieben sind. Das jeweilige Triebrad wird mittels jeweils eines Elektromotors angetrieben. Die Pistenraupe weist zudem eine Heckfräse auf, die heckseitig an der Pistenraupe angebracht ist. Die Heckfräse weist zwei Fräswellen auf, die über jeweils einen Elektromotor angetrieben sind.

Aus der DE 20 2013 004 087 U1 ist eine weitere, mit einem emissionsfreien Fahrantriebsystem versehene Pistenraupe bekannt. Zwei Laufwerksseiten eines Kettenlaufwerks der Pistenraupe werden über jeweils ein Triebrad mittels jeweils eines Elektromotors angetrieben. Auch eine rotierbare Fräswelle einer Heckfräse wird mittels eines Elektromotors angetrieben. Zudem weist die Pistenraupe zusätzliche hydraulische Stellmittel zum Verstellen eines frontseitigen Räumschilds und zum Verstellen eines Heckgeräteträgers und der Heckfräse auf, die über eine Hydraulikpumpe gespeist werden. Die Hydraulikpumpe wird durch einen Elektromotor angetrieben, um den benötigten Hydraulikdruck innerhalb des Hydrauliksystems aufzubauen.

Aufgabe der Erfindung ist es, eine Pistenraupe der eingangs genannten Art zu schaffen, die ohne großen sicherheitstechnischen Aufwand einen emissionsfreien Betrieb ermöglicht.

Diese Aufgabe wird durch die Merkmale des Anspruchs 1 gelöst. Da - wie bei herkömmlichen Pistenraupen - ein Arbeitshydrauliksystem mit wenigstens einem hydrostatischen Rotationsantrieb vorgesehen ist, müssen für entsprechende Arbeitsfunktionen keine sicherheitstechnischen Maßnahmen ergriffen werden, die bei rein elektrischen Antrieben notwendig wären. Als Arbeitsfunktion ist ein Heckfräsenbetrieb vorgesehen. Die entsprechende Arbeitsfunktion wird durch einen hydrostatischen Rotationsantrieb erzielt, wobei eine Funktion der Heckfräse auch durch zwei hydrostatische Rotationsantriebe erzielt werden kann, sofern die Heckfräse zwei in Fahrzeugquerrichtung nebeneinander angeordnete, antreibbare Fräswellen aufweist. Ein einzelner Elektromotor dient zum Antrieb des Arbeitshydrauliksystems. Als Energiequelle für den Elektromotor kann vorzugsweise eine Brennstoffzelle oder ein Batteriesystem vorgesehen sein.

In Ausgestaltung der Erfindung ist zur Energieversorgung der Elektromotoren ein wiederaufladbares Batteriesystem vorgesehen. Das Batteriesystem weist wenigstens einen Akkumulator, vorzugsweise ein oder mehrere Akkumulatorpakete aus jeweils einer Vielzahl von Akkumulatoren auf. Die Akkumulatoren können durch Lithium-Ionen-Akkumulatoren gebildet sein. Das Batteriesystem speist sowohl den Elektromotor für das Arbeitshydrauliksystem als auch die Elektromotoren für das Fahrantriebssystem.

In weiterer Ausgestaltung der Erfindung sind der Elektromotor für das Arbeitshydrauliksystem und/oder die Elektromotoren für das Fahrantriebsystem als Synchronmotoren gestaltet und werden im Betrieb mit einer Batteriespannung von 400 V oder 100 V versorgt. Die vergleichsweise geringe Spannung von 100 V ermöglicht es, auf sicherheitstechnischen Aufwand, der im Falle von Hochspannungselektrik (400 V) notwendig ist, zu verzichten. Dies gewährleistet einen vergleichsweise einfachen Aufbau von Fahr- und Arbeitsfunktionen der Pistenraupe bei dennoch emissionsfreiem Betrieb. Bei Einsatz einer Batteriespannung von etwa 400 V wird entsprechende Hochspannungselektrik und -elektronik benötigt.

In weiterer Ausgestaltung der Erfindung ist fahrzeugseitig ein Ladegerät, insbesondere mit einem Ladestecker, vorgesehen. Die fahrzeugseitige Anordnung des Ladegeräts und des fakultativen Ladesteckers ermöglicht den einfachen Anschluss der Pistenraupe an ein stationäres Stromnetz. Der Spannungswandler ermöglicht den Anschluss eines 100 V-Synchronmotors an ein 220 V-Stromnetz oder ein 380 V-Stromnetz oder ein ähnliches Hochspannungsnetz und gewährleistet hierdurch eine Schnellladungsmöglichkeit. Besonders vorteilhaft ist das Ladegerät im Bereich einer Rückwand eines Fahrerhauses angebracht. Dies ermöglicht einen besonders einfachen Zugang des Ladegeräts durch eine Bedienperson. Der fakultative vorhandene, ebenfalls an Bord der Pistenraupe befindliche Ladestecker mit Ladekabel ermöglicht eine einfach Steckverbindung mit einer stationären, gebäude- oder ladestationsseitigen Steckdose. Bei einer Betriebsspannung von 100 V ist das Ladegerät zusätzlich mit einem Spannungswandler versehen.

In weiterer Ausgestaltung der Erfindung ist das Batteriesystem in einem Fahrwerksrahmen unterhalb des Fahrerhauses austauschbar untergebracht. Die Anordnung des Batteriesystems gemäß dieser Ausgestaltung gewährleistet zum einen einen tiefen Schwerpunkt für die Pistenraupe. Zum anderen wird eine einfache Zugänglichkeit des Batteriesystems für einen Austausch gegen ein anderes Batteriesystem ermöglicht. Vorteilhaft ist das Fahrerhaus zwischen einer Betriebsstellung und einer Servicestellung kippbeweglich angeordnet. In der gekippten Stellung des Fahrerhauses ist ein Zugang zu dem Batteriesystem gewährleistet.

In weiterer Ausgestaltung der Erfindung weist das Batteriesystem mehrere Batteriepakete auf, die jeweils mittels einer elektrischen Steckverbindung schnellwechselbar miteinander sowie mit dem wenigstens einen Elektromotor verbunden sind. Entsprechende Batteriepakete, die auch als Battery Packs bezeichnet werden, können durch diese Ausgestaltung sehr schnell von einer Fahrzeugelektrik der Pistenraupe entkoppelt und aus dem Fahrzeug entnommen werden. In gleicher Weise können neue Batteriepakete schnell ins Fahrzeug eingesetzt und manuell durch Koppeln der elektrischen Steckverbindung mit der Fahrzeugelektrik verbunden werden. Hierdurch ergibt sich ein Schnellwechselvorgang für das Batteriesystem.

In weiterer Ausgestaltung der Erfindung ist den Batteriepaketen eine elektrische Schaltung zugeordnet, die die Batteriepakete elektrisch miteinander sowie mit weiteren elektrischen oder elektronischen Bauteilkomponenten der Fahrzeugelektrik und insbesondere der Elektromotoren koppelt. Die elektrische Schaltung verbindet die Batteriepakete, insbesondere in Reihe- oder in Parallelschaltung, elektrisch miteinander, um die Batteriepakete als einheitliches Batteriesystem für den Betrieb der Elektromotoren einzusetzen.

In weiterer Ausgestaltung der Erfindung ist im Bereich eines heckseitigen Geräteträgers der Pistenraupe ein elektrisches Steckverbindungsteil montiert, das mit dem wiederaufladbaren Batteriesystem elektrisch verbunden ist, und dem wenigstens einen an der Heckfräse befestigten Elektromotor ist ein komplementäres Steckverbindungsteil zugeordnet, um den Elektromotor lösbar elektrisch an das wiederaufladebare Batteriesystem anzuschließen. Die Anordnung der elektrischen Steckverbindung im Bereich des heckseitigen Geräteträgers ermöglicht eine einfache Kopplung oder eine einfache Entkopplung des elektrischen Antriebs für die Heckfräse von der Fahrzeugelektrik.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt eine Ausführungsform einer erfindungsgemäßen Pistenraupe in einer teilweise aufgeschnittenen, schematischen Seitenansicht,
- Fig. 2: ein Blockschema der Fahr- und Arbeitsfunktionen der Pistenraupe gemäß Fig. 1 und
- Fig. 3: ein Blockschema einer weiteren Ausführungsform einer erfindungsgemäßen Pistenraupe ähnlich den Fig. 1 und 2.

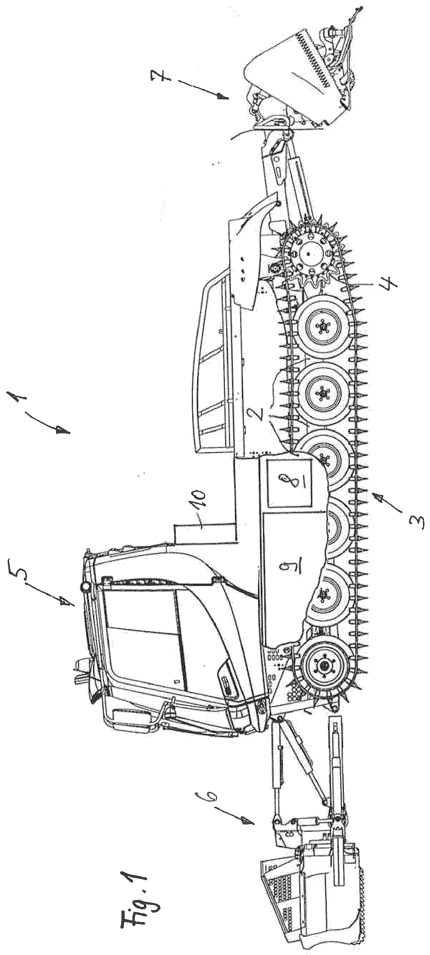

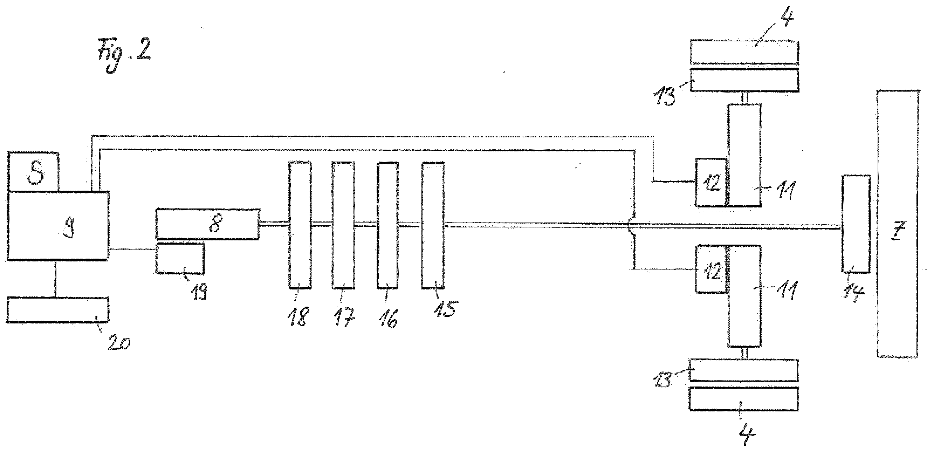

Eine Pistenraupe 1 nach den Fig. 1 und 2 weist einen Fahrwerksrahmen 2 auf, an dessen gegenüberliegenden Längsseiten zwei Laufwerksseiten eines Kettenlaufwerks 3 angeordnet sind. Jede Laufwerksseite des Kettenlaufwerks 3 weist eine umlaufende Kette, ein frontseitiges Spannrad, mehrere an das frontseitige Spannrad in Fahrzeuglängsrichtung nach hinten anschließende und in einer Reihe hintereinander angeordnete Laufräder sowie rückseitig ein auch als Turasrad 4 bezeichnetes Triebrad auf. Die Kette ist im Bereich des frontseitigen Spannrads und des rückseitigen Turasrads 4 umgelenkt und läuft mit einem Obertrum oberhalb der Laufräder und mit einem Untertrum unterhalb der Laufräder entlang.

Heckseitig ist an dem Fahrwerksrahmen 2 ein hydraulisch verstellbarer Heckgeräteträger vorgesehen, der nicht näher bezeichnet ist. Der Heckgeräteträger trägt eine Heckfräse 7. Die Heckfräse 7 ist mit wenigstens einer rotierbaren Fräswelle und einer Finisheranordnung versehen, die den durch die Fräswelle zerkleinerten und aufgeworfenen Schneeuntergrund glättet.

Frontseitig ist an einer frontseitigen Stirnseite des Fahrwerksrahmens 2 ein Räumschild 6 angelenkt. Das Räumschild 6 ist mithilfe von hydraulischen Stellmitteln verstellbar. In einer vorderen Hälfte des Fahrwerksrahmens 2 sitzt auf dem Fahrwerksrahmen 2 ein Fahrerhaus 5, in dem ein Fahrer Platz nimmt, um die Pistenraupe 1 bezüglich ihrer Fahr- und Arbeitsfunktionen zu steuern. Das Fahrerhaus 5 ist für Servicearbeiten aus der in Fig. 1 dargestellten Betriebsstellung in eine Servicestellung nach vorne verkippbar um eine in Fahrzeugquerrichtung erstreckte Kippachse, die das Fahrerhaus 5 kippbeweglich am Fahrwerksrahmen 2 anlenkt.

Die Pistenraupe 1 weist ein Arbeitshydrauliksystem auf, das einen hydrostatischen Fräsmotor 14 für die Fräswelle der Heckfräse 7 sowie verschiedene hydraulische Arbeits- und Betriebsfunktionen der Pistenraupe 1 steuert. Zusätzlich zu dem als hydrostatischer Rotationsantrieb gestalteten Fräsmotor 14 sind eine hydrostatische Bremspumpe 18, eine hydrostatische Arbeitspumpe 17 und eine hydrostatische Lüfterpumpe 16 vorgesehen, die hydraulische Arbeits- und Betriebsfunktionen der Pistenraupe 1 speisen. Dem hydrostatischen Fräsmotor 14 ist eine hydrostatische Fräspumpe 15 zugeordnet, die entsprechend den hydraulischen Druck für den hydrostatischen Fräsmotor 14 aufbringt. Die genannten hydrostatischen Pumpen 15 bis 18 werden koaxial durch eine Antriebswelle eines Elektromotors 8 angetrieben. Die Arbeitspumpe 17 dient zum Aufbau eines hydrostatischen Drucks für Linearaktuatoren zum Verstellen des Räumschilds und/oder Linearaktuatoren zur Verstellung des Heckgeräteträgers. Die Lüfterpumpe 16 dient zur Erzeugung eines hydrostatischen Drucks für den Betrieb eines hydrostatischen Rotationsantriebs für ein Lüfterrad oder Ähnliches zur Belüftung und Kühlung elektrischer Funktionseinheiten der Pistenraupe 1, die nachfolgend näher beschrieben werden.

Die Bremspumpe 18, die Arbeitspumpe 17, die Lüfterpumpe 16, die Fräspumpe 15 und der hydrostatische Fräsmotor 14 sind Teile des Arbeitshydrauliksystems der Pistenraupe 1.

Ein Fahrantriebsystem für die Pistenraupe 1 weist zwei Elektromotoren 11 auf, die als Radnabenmotoren koaxial zu jeweils einem Turasrad 4 mittels jeweils eines Planetengetriebes 13 mechanisch mit dem jeweiligen Turasrad 4 verbunden sind, um dieses anzutreiben. Die beiden Elektromotoren 11 sind Synchronmotoren, die mittels jeweils eines Frequenzumrichters 12 durch Gleichstrom eines Batteriesystems 9 gespeist werden, das durch eine Vielzahl von wiederaufladbaren Akkumulatoren gebildet ist. Das Batteriesystem 9 ist im Fahrwerksrahmen 2 unterhalb des Fahrerhauses 5 untergebracht und dort lösbar befestigt, um das Batteriesystem 9 austauschen zu können. Das Batteriesystem 9 ist unterhalb des Fahrerhauses 5 relativ zum Fahrwerksrahmen 2 derart positioniert, dass das Batteriesystem 9 in der gekippten Servicestellung des Fahrerhauses 5 von oben her zugänglich ist, um entnommen werden zu können. Dadurch kann das Batteriesystem 9 in einfacher Weise durch ein neues Batteriesystem ersetzt werden.

Das Arbeitshydrauliksystem wird durch einen Elektromotor 8 angetrieben, der die verschiedenen Pumpeinheiten rotatorisch antreibt und dadurch den gewünschten hydrostatischen Druck erzeugt. Dabei sind die verschiedenen Pumpeinheiten koaxial zu einer Antriebswelle des Elektromotors 8 angeordnet, um eine einfache Antriebsübertragung zu ermöglichen. Der Elektromotor 8 ist ebenfalls als Synchronmotor ausgebildet und wird durch das Batteriesystem 9 mit Strom versorgt. Ein Frequenzumrichter 19 dient auch bei dem Elektromotor 8 zur Umwandlung des Gleichstroms des Batteriesystems 9 in den für den Synchronmotor des Elektromotors 8 benötigten Wechselstrom.

Sowohl der Elektromotor 8 als auch die beiden Elektromotoren 11 werden mit einer Betriebsspannung von 100 V betrieben.

Den Elektromotoren 8 und 11 sowie dem Batteriesystem 9 ist eine elektronische Steuereinheit S zugeordnet, die eine Ansteuerung der Elektromotoren 8, 11 bewirkt und ein Batteriemanagementsystem umfasst, das eine gleichmäßige Auslastung der Vielzahl von Akkumulatoren innerhalb des Batteriesystems 9 gewährleistet. Ein dem Batteriesystem 9 zugeordneter Bremschopper 20 kann elektrische Energie aufnehmen, die von dem Batteriesystem 9 insbesondere bei Talfahrt der Pistenraupe 1 und einer entsprechenden Energierückspeisung nicht mehr aufgenommen werden kann.

Um ein Aufladen des Batteriesystems 9 zu ermöglichen, ist an das Batteriesystem 9 ein Ladegerät 10 permanent angeschlossen, das an einer Rückwand des Fahrerhauses 5 fahrzeugfest angeordnet ist. Das Ladegerät 10 ist mit einem Spannungswandler versehen, um eine Aufladung des eine Batteriespannung von 100 V aufweisenden Batteriesystems 9 von einem gebäudeseitigen 380 V-Stromnetz bewirken zu können.

Die Pistenraupe 1 weist demzufolge einen rein elektrischen Fahrantrieb auf, wobei die beiden Elektromotoren 11 direkt auf die Turasräder 4 beider Laufwerksseiten des Kettenlaufwerks 3 wirken. Zudem weist die Pistenraupe 1 hydrostatische Antriebe für die Heckfräse 7 einerseits und verschiedene Arbeits- und Betriebsfunktionen der Pistenraupe 1 andererseits auf, die über einen gemeinsamen Elektromotor 8 angetrieben werden.

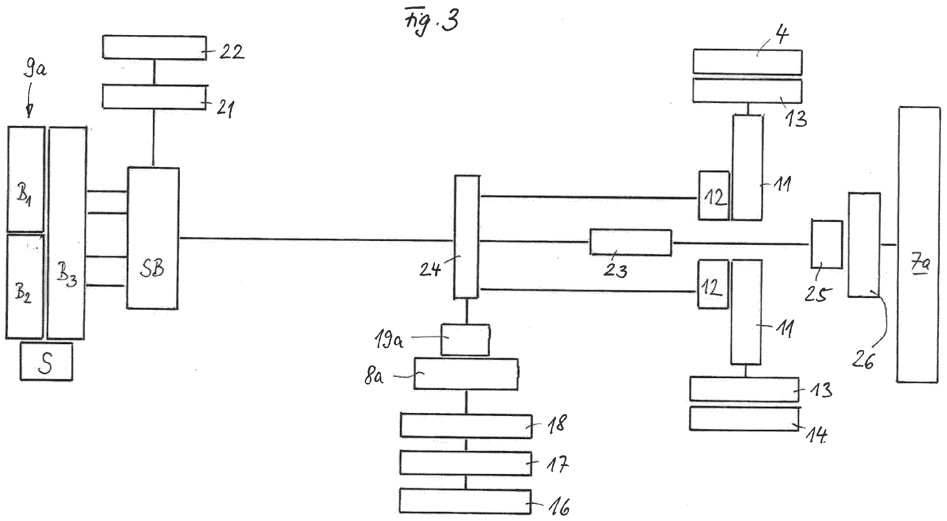

Eine Pistenraupe gemäß Fig. 3 entspricht in Aufbau und Funktion bis auf die nachfolgend aufgeführten Unterschiede der Pistenraupe, wie sie zuvor unter Zuhilfenahme der Fig. 1 und 2 beschrieben wurde. Bei dem Blockschaltbild gemäß Fig. 3 sind demzufolge funktionsgleiche Teile und Komponenten mit gleichen Bezugszeichen unter Hinzufügung des Buchstabens a versehen. Zur Vermeidung von Wiederholungen wird bezüglich bau- und funktionsgleicher Komponenten wie auch bezüglich des grundsätzlichen Aufbaus und der Funktion der Pistenraupe auf die anhand der Fig. 1 und 2 beschriebene Ausführungsform verwiesen.

Die Ausführungsform einer Pistenraupe gemäß Fig. 3 weist einige wesentliche Unterschiede auf, die nachfolgend beschrieben sind.

Die Energieversorgung der verschiedenen Elektromotoren der Pistenraupe ist im Hochvoltbereich mit einer Betriebsspannung von 380 V/400 V vorgesehen.

Das Batteriesystem 9a wird durch mehrere Batteriepakete B₁ bis B₃ gebildet. Die Batteriepakete B₁ bis B₃ sind durch eine elektrische Schaltung SB miteinander elektrisch verbunden. Die elektrische Schaltung SB ist in einem geschlossenen Gehäuse untergebracht. An die elektrische Schaltung SB ist sowohl ein Ladegerät 21 als auch ein Ladestecker 22 angeschlossen, wobei der Ladestecker 22 über ein flexibles Ladekabel mit dem Ladegerät verbunden ist. Der Ladestecker 22 kann bei Bedarf in eine Steckdose eines stationären Stromversorgungsnetzes eingesteckt werden. Dem Batteriesystem 9a ist analog der Ausführungsform nach Fig. 2 eine elektronische Steuereinheit S zugeordnet, die ein Batteriemanagementsystem umfasst. Die Batteriepakete B₁ und B₂ sind beim dargestellten Ausführungsbeispiel mit vier Batterien und das Batteriepaket B₃ mit acht Batterien versehen.

Durch den Betrieb der Elektromotoren 8a, 11, 26 im Hochvoltbereich mit 380 V/400 V umfasst die entsprechende Fahrzeugelektrik einen Hochvoltverteiler 24. An den Hochvoltverteiler 24 ist über einen Frequenzumrichter 19a zum einen der Elektromotor 8a angeschlossen, der das Arbeitshydrauliksystem betreibt. Das Arbeitshydrauliksystem umfasst eine hydrostatische Bremspumpe 18, eine hydrostatische Arbeitspumpe 17 und eine hydrostatische Lüfterpumpe 16, deren Funktionen den zuvor anhand der Fig. 1 und 2 bereits beschriebenen Funktionen entsprechen.

Ein weiterer wesentlicher Unterschied bei der Pistenraupe gemäß Fig. 3 ist es, dass ein Elektromotor 26 zum Antreiben wenigstens einer Fräswelle der Heckfräse 7a direkt an der Heckfräse 7a montiert ist, so dass auch die Energieversorgung dieses Elektromotors 26 über einen Frequenzumrichter 25 mittels des bereits beschriebenen, im Hochvoltbereich betriebenen Batteriesystems erfolgt. Der Elektromotor 26 für die Heckfräse 7a ist mittels seines Frequenzumrichters 25 über eine elektrische Leitung mit dem Hochvoltverteiler 24 verbunden. Da die Heckfräse 7a lösbar an einem heckseitigen Geräteträger der Pistenraupe angeordnet ist, ist im Bereich des Geräteträgers eine Hochvoltsteckverbindung 23 vorgesehen, um den Elektromotor 26 für die Heckfräse 7a mit der Fahrzeugelektrik zu verbinden. Die Hochvoltsteckverbindung 23 weist zwei zueinander komplementäre und zusammensteckbare Steckverbindungsteile auf, von denen ein Steckverbindungsteil über ein flexibles Kabel dem Elektromotor 26 und das andere Steckverbindungsteil mit der fahrzeugseitigen Elektrik verbunden ist. Das letztgenannte Steckverbindungsteil ist im Bereich des Geräteträgers fest angeordnet. Bei einem Entfernen der Heckfräse 7a von der Pistenraupe kann somit in einfacher Weise die Hochvoltsteckverbindung 23 getrennt werden und die Heckfräse 7a vom Geräteträger gelöst werden.

Die elektrischen Fahrantriebe 11 bis 13 für die beiden Turasräder 4 des Kettenlaufwerks unterscheiden sich nicht von der Ausführungsform gemäß den Fig. 1 und 2, so dass hierauf an dieser Stelle nicht näher eingegangen werden muss. - - - - - - - - - - - - - - -

## Patentansprüche

1. Pistenraupe (1) mit einer Heckfräse (7) sowie mit einem Kettenlaufwerk (3), das mittels eines emissionsfreien Fahrantriebsystems antreibbar ist, wobei das emissionsfreie Fahrantriebsystem zwei Elektromotoren (11) aufweist, die jeweils einem Turasrad (4) einer Laufwerksseite des Kettenlaufwerks (3) zugeordnet sind, **dadurch gekennzeichnet, dass** ein Arbeitshydrauliksystem vorgesehen ist, das wenigstens einen einer Arbeitsfunktion der Heckfräse der Pistenraupe zugeordneten hydrostatischen Rotationsantrieb aufweist, und dass das Arbeitshydrauliksystem durch einen einzelnen Elektromotor (8, 8a) angetrieben ist, der durch eine fahrzeugseitig montierte Energiequelle versorgt ist.

2. Pistenraupe nach Anspruch 1, **dadurch gekennzeichnet, dass** zur Energieversorgung des Elektromotors (8, 8a) für das Arbeitshydrauliksystem und der Elektromotoren (11) für das Fahrantriebssystem ein wiederaufladbares Batteriesystem (9, 9a) vorgesehen ist.

3. Pistenraupe nach Anspruch 2, **dadurch gekennzeichnet, dass** der Elektromotor (8, 8a) für das Arbeitshydrauliksystem als Synchronmotor gestaltet und - im Betrieb - mit einer Batteriespannung von 400 V oder 100 V versorgt wird.

4. Pistenraupe nach Anspruch 1 oder 2, **dadurch gekennzeichnet, dass** die Elektromotoren (11) des Fahrantriebsystems als Synchronmotoren gestaltet und - im Betrieb - mit einer Batteriespannung von 400 V oder 100 V versorgt werden.

5. Pistenraupe nach einem der vorhergehenden Ansprüche, **dadurch gekennzeichnet, dass** fahrzeugseitig ein Ladegerät (10, 21), insbesondere mit einem Ladestecker (22), vorgesehen ist.

6. Pistenraupe nach Anspruch 5, **dadurch gekennzeichnet, dass** das Ladegerät (10) mit einem Spannungswandler versehen ist.

7. Pistenraupe nach Anspruch 5 oder 6, **dadurch gekennzeichnet, dass** das Ladegerät (10, 21) und der Ladestecker (22) im Bereich einer Rückwand eines Fahrerhauses (5) angebracht ist.

8. Pistenraupe nach einem der vorhergehenden Ansprüche, **dadurch gekennzeichnet, dass** das Batteriesystem (9, 9a) in einem Fahrwerksrahmen (2) unterhalb des Fahrerhauses (5) austauschbar untergebracht ist.

9. Pistenraupe nach einem der vorhergehenden Ansprüche, **dadurch gekennzeichnet, dass** das Batteriesystem (9a) mehrere Batteriepakete (B₁ bis B₃) aufweist, die jeweils mittels einer elektrischen Steckverbindung (23) schnellwechselbar miteinander sowie mit dem wenigstens einen Elektromotor (26) verbunden sind.

10. Pistenraupe nach Anspruch 9, **dadurch gekennzeichnet, dass** den Batteriepaketen (B₁ bis B₃) eine elektrische Schaltung (SB) zugeordnet ist, die die Batteriepakete (B₁ bis B₃) elektrisch miteinander sowie mit weiteren elektrischen oder elektronischen Bauteilkomponenten der Fahrzeugelektrik und insbesondere der Elektromotoren (8a, 11, 26) koppelt.
